# EUROPÄISCHE PATENTANMELDUNG

(11) **EP 1 045 502 A1**
(43) Veröffentlichungstag der Anmeldung: **18.10.2000**
(21) Anmeldenummer: 99810298.2
(22) Anmeldetag: 12.04.1999
(51) Int. Cl.: H02J 9/06

(54) **Steuerschaltung für Geräte mit einem oder mehreren Drehstromanschlüssen**

(71) Anmelder: Elro-Werke AG, 5620 Bremgarten (CH)
(72) Erfinder: Imboden, Markus, 5620 Bremgarten (CH)
(74) Vertreter: Liebetanz, Michael, Dipl.-Phys.

(57) **Zusammenfassung**

Die Steuerschaltung ist für Geräte mit einem oder mehreren Drehstromanschlüssen (L1, L2, L3; N) vorgesehen, die über eine Vielzahl von elektrischen Heizeinrichtungen verfügen. Diese werden über verschiedene Phasen und Neutralleiter mit Spannung versorgt, wobei jede einzelne der Vielzahl von elektrischen Heizeinrichtungen über eine elektronische Steuerung steuerbar ist. Dabei ist die Steuerschaltung (1, 11, 21; 5) mit einer Überwachungsschaltung für jeden Drehstromanschluss (L1, L2, L3; N) versehen, mit der eine lebende Phase (L1 oder L2 oder L3) und Neutralleiter (N) zur Erzeugung einer Versorgungsspannung (4) für die elektronische Steuerung der elektrischen Heizeinrichtungen auswählbar ist. Damit kann, solange mindestens eine Phase verfügbar ist, diese auf den Ausgang der Schaltung geschaltet werden, so dass die elektronische Steuerung für die elektrischen Heizeinrichtungen selber mit der letzten lebenden Phase versorgt wird.

## Beschreibung

Die Erfindung betrifft eine Steuerschaltung für Geräte mit einem oder mehreren Drehstromanschlüssen, die über eine Vielzahl von elektrischen Heizeinrichtungen verfügen, die über verschiedene Phasen und Neutralleiter mit Spannung versorgt werden, wobei jede einzelne der Vielzahl von elektrischen Heizeinrichtungen über die Steuerschaltung steuerbar ist.

Aus dem Stand der Technik sind verschiedene Schaltungsanordnungen oder Steuerschaltungen für Geräte mit Drehstromanschlüssen bekannt. Sollte eine der mit der Schaltungsanordnung gerade verbundenen Phase ausfallen, so sind die besagten Geräte nicht einsatzfähig. Dies ist im Hinblick auf eine hohe Betriebssicherheit unerwünscht.

Ausgehend von diesem Stand der Technik liegt der Erfindung die Aufgabe zugrunde, eine Steuerschaltung für Geräte mit einem oder mehreren Drehstromanschlüssen derart anzugeben, dass das Gerät auch bei Ausfall einer oder mehrerer Phasen weiterhin arbeitet.

Diese Aufgabe wird erfindungsgemäss für eine Steuerschaltung der eingangs genannten Art dadurch gelöst, dass die Steuerschaltung über eine Überwachungsschaltung für jeden Drehstromanschluss verfügt, mit der eine lebende Phase und Neutralleiter zur Erzeugung einer Versorgungsspannung für eine elektronische Steuerung auswählbar ist.

Durch diese Steuerschaltung werden alle Phasen eines Drehstromanschlusses überwacht. Dabei wird, solange mindestens eine Phase verfügbar ist, diese auf den Ausgang der Schaltung geschaltet. Die Steuerschaltung selber wird mit der letzten lebenden Phase versorgt.

Damit kann ein Gerät mit einem oder mehreren Drehstromanschlüssen, das über eine Vielzahl von elektrischen Heizeinrichtungen verfügt, auch dann noch betrieben werden, wenn eine beliebige Phase des Drehstroms ausfällt. Bei Vorrichtungen gemäss dem Stand der Technik besteht bei Ausfall einer Phase zwar noch Leistung zum Betrieb von beispielsweise Heizvorrichtungen in einer Küche zur Verfügung. Die Ansteuerung dieser Heizvorrichtungen, beispielsweise eine einzelne Kochplatte, ist aber auf Grund der fehlenden Versorgungsspannung der elektronischen Steuerung nicht mehr möglich.

Bei einem bevorzugten Ausführungsbeispiel werden verschiedene Ausgänge mehrerer überwachter Drehstromanschlüsse zusammengefasst, so dass von einer bestimmten Anzahl von Phasen und einer bestimmten Anzahl von Anschlüssen immer eine vorbestimmte Phase für die Steuerung verfügbar ist.

Es kann am Ausgang der Schaltung jeweils eine Spannungsversorgung angeschlossen werden, die Gleich- oder Wechselspannung zur Verfügung stellt.

Nachstehend werden Ausführungsbeispiele der Erfindung anhand der beiliegenden Zeichnungen erläutert. Es zeigen:
- Fig. 1: ein Blockschaltbild einer Steuerschaltung mit einem nachgeschalteten Netzgerät gemäss einem ersten Ausführungsbeispiel,
- Fig. 2: eine Steuerschaltung gemäss einem zweiten Ausführungsbeispiel mit einer zusammenfassenden Steuerschaltung zur Anschaltung von drei Drehstromanschlüssen, und,
- Fig. 3: ein schematisches Schaltbild der Logik für eine Steuerschaltung bei zwei Netzanschlüssen, welche bei den Steuerschaltungen nach Fig. 1 oder 2 einsetzbar ist.

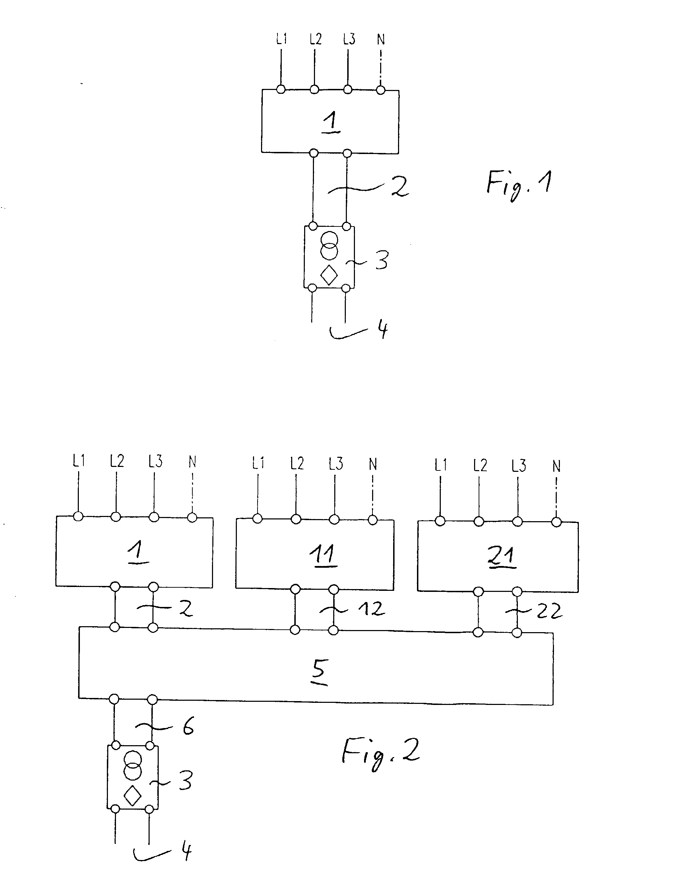

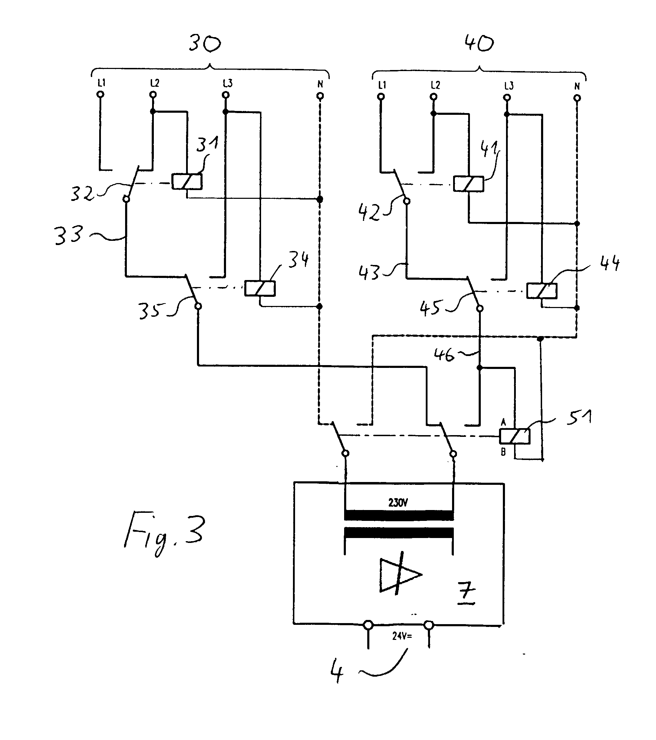

Die Figur 1 zeigt eine Steuerschaltung, die mit drei Phasen L1, L2, L3 und einer Nullphase N beschaltet ist. Sie ist mit dem Bezugszeichen 1 gekennzeichnet. Ausgangsseitig wird über Leitungen 2 beispielsweise übliche 230 Volt Wechselspannung abgegriffen. Diese wird in einem nachgeschalteten Netzgerät 3 beispielsweise auf 24 Volt Gleichspannung 4 transformiert. Diese Gleichspannung 4 stellt beispielsweise die Versorgungsspannung der elektronischen Steuerung für die Geräte mit einem oder mehreren Drehstromanschlüssen dar. Die elektronische Steuerung 1, die dafür sorgt, dass eine Versorgungsspannung für die genannte elektronische Steuerung für beispielsweise Heizapparate auch dann noch vorliegt, wenn eine oder zwei der drei Phasen tot ist, ist beispielsweise in der Fig. 3 dargestellt.

Grundsätzlich ist aber gemäss der Erfindung jede Logikschaltung, ob mit Relais oder anders gelöst, einsetzbar, die gewährleistet, dass eine beliebige lebende Phase zur Erzeugung der Versorgungsspannung weiterverwendet wird und dass die Versorgungsspannung bei Ausfall einer Phase durch Umschaltung auf eine andere noch lebende Phase aufrechterhalten wird.

Die Figur 2 zeigt drei Steuerschaltungen 1, 11 und 21, die über Leitungen 2, 12 und 22 mit einer zusammenfassenden Schaltung 5 verbunden sind und die Schaltung 5 jeweils beispielsweise mit 230 Volt Wechselspannung beaufschlagen. Hier besteht der Vorteil, dass die Steuerschaltung 5 auch dann noch arbeitet und die Versorgungsspannung für die nachgeschalteten Geräte mit Drehstromanschlüssen zur Verfügung stellt, wenn ganze Äste der Spannungsversorgung zusammengebrochen sind. Nachstehend wird nun erläutert, wie, solange eine der drei Steuerschaltungen 1, 11 oder 21 noch eine lebende Phase aufweist, eine Versorgungsspannung erzeugt und auf die Ausgangsanschlüsse 6 gegeben wird. Den Ausgangsanschlüssen 6 folgt beispielsweise wie in der Fig. 2 dargestellt ein Netzgerät 3, welches die Versorgungsspannung 4 erzeugt

Die Fig. 3 zeigt ein schematisches Schaltbild der Logik für eine Steuerschaltung bei zwei Netzanschlüssen 30 und 40, welche bei den Steuerschaltungen 1, 11, 21 oder 5 nach Fig. 1 oder 2 einsetzbar ist. Gleiche Merkmale werden durch gleiche Bezugszeichen gekennzeichnet. Die Netzanschlüsse 30 und 40 sind gleich aufgebaut. Sie verfügen über die Phasen L1, L2 und L3 sowie einen Neutralleiter.

Die Phasen L1 und L2 beim Netzanschluss 30 werden über ein Relais 31 mit einem Kontakt 32 zusammengeschaltet. Diese Weiterschaltung 33 wird mit der Phase L3 durch ein weiteres Relais 34 mit einem Kontakt 35 zusammengeschaltet. Die Relais 31 und 34 sind so ausgelegt, dass sie über eine der beiden beschalteten Phase und der Neutralleiter geschaltet werden und dabei die eigene vorgenannte Phase weiterschalten, sofern diese eine lebende Phase ist.

Gleiches gilt für die Relais 41 und 44 mit Kontakten 42 und 45, wobei die weitergeschaltete Phase hier das Bezugszeichen 43 trägt. Weiterhin werden die beiden Netzanschlüsse 30 und 40 mit Hilfe eines weiteren, an der weitergeschalteten Phase 46 des zweiten Netzanschlusses 40 angeschalteten Relais 51 weitergeschaltet.

Aus der Fig. 3 ist zu erkennen, dass alle Phasen des Netzanschlusses 2 tot sind, da keines der Relais 41, 44 und 51 angezogen haben. Dagegen lebt die Phase L2 des ersten Netzanschlusses 30, da das Relais 31 angezogen hat. Damit ist diese Phase weitergeschaltet und steht nach einer Transformation im Netzteil 7 als 24 Volt Gleichspannung als Versorgungsspannung 4 zur Verfügung. Es ist zu beachten, dass es im vorliegenden Fall unerheblich ist, ob die Phase L1 des ersten Netzanschlusses 30 lebt. Sie stände eventuell als letzte Phase zur Verfügung, wenn auch L2 des ersten Netzanschlusses 30 ausfiele. Im störungsfreien Betrieb dagegen sind alle Relais angezogen und es ist die Phase L3 des zweiten Netzanschlusses 40, aus der die Versorgungsspannung 4 des nachgeschalteten Netzgerätes zur Steuerung der elektrischen Heizeinrichtungen erzeugt wird.

## Patentansprüche

1. Steuerschaltung für Geräte mit einem oder mehreren Drehstromanschlüssen (L1, L2, L3; N), die über eine Vielzahl von elektrischen Heizeinrichtungen verfügen, die über verschiedene Phasen und Neutralleiter mit Spannung versorgt werden, wobei jede einzelne der Vielzahl von elektrischen Heizeinrichtungen über eine elektronische Steuerung steuerbar ist, **dadurch gekennzeichnet**, dass die Steuerschaltung (1, 11, 21; 5) über eine Überwachungsschaltung für jeden Drehstromanschluss (L1, L2, L3; N) verfügt, mit der eine lebende Phase (L1 oder L2 oder L3) und Neutralleiter (N) zur Erzeugung einer Versorgungsspannung (4) für die elektronische Steuerung der elektrischen Heizeinrichtungen auswählbar ist.

2. Steuerschaltung nach Anspruch 1, dadurch gekennzeichnet, dass bei Geräten mit mehreren Drehstromanschlüssen (L1, L2, L3; N) getrennte erste Steuerschaltungen (1 bzw. 11 bzw. 21) zur Auswahl einer lebenden Phase (Ll oder L2 oder L3) vorgesehen sind und dass die ausgewählten Phasen über Leitungen (2, 12, 22) einer zweiten Steuerschaltung (5) übermittelbar sind, mit der eine lebende Phase (L1 oder L2 oder L3) und Neutralleiter (N) zur Erzeugung einer Versorgungsspannung (4) für die elektronische Steuerung der elektrischen Heizeinrichtungen auswählbar ist.
